## Europäisches Patentamt

## European Patent Office

## Office européen des brevets

(19)

(11) Veröffentlichungsnummer: **0 214 362**
**B1**

(12) **EUROPÄISCHE PATENTSCHRIFT**

(45) Veröffentlichungstag der Patentschrift:
**29.08.90**

(51) Int. Cl.⁵: **A21D 2/08**

(21) Anmeldenummer: **86102194.7**

(22) Anmeldetag: **20.02.86**

(54) Backteig, -masse bzw. -mischung sowie Torffraktion und Verfahren zu dessen Herstellung.

(30) Priorität: **07.08.85 DE 3528284**

(43) Veröffentlichungstag der Anmeldung:
**18.03.87 Patentblatt 87/12**

(45) Bekanntmachung des Hinweises auf die Patenterteilung:
**29.08.90 Patentblatt 90/35**

(84) Benannte Vertragsstaaten:
**AT BE CH DE FR GB IT LI NL SE**

(56) Entgegenhaltungen:
**DE-A- 2 133 302**
**DE-A- 2 336 562**

**FOOD TECHNOLOGY, Band 38, Nr. 1, Januar 1984,
Seiten 64,65,68,69, Chicago, Illinois, US; J.L. VETTER:
"Fiber as a food ingredient"**

(73) Patentinhaber: **Torf- und Düngemittelwerk Johann Dues,
Schwarzer Weg 191, D-4477 Twist 1(DE)**

(72) Erfinder: **Dues, Johannes, Schwarzer Weg 191,
D-4477 Twist 1(DE)**

(74) Vertreter: **Busse & Busse Patentanwälte,
Postfach 1226 Grosshandelsring 6,
D-4500 Osnabrück(DE)**

**Beschreibung**

Die Erfindung betrifft einen Backteig, eine Backmasse bzw. eine Backmischung nach dem Oberbegriff des Anspruchs 1 sowie eine Torffraktion und Verfahren zu deren Herstellung.

Die menschlichen Hauptnahrungsmittel und unter diesen insbesondere das Brot führen allgemein auf jahrtausendealte Entwicklungen zurück, an deren Anfang bereits Zusammensetzungen und Formen der heutigen Art anzunehmen sind, in der sich aber auch den unterschiedlichen Anforderungen entsprechende Veränderungen feststellen ließen. In jüngerer Zeit ergeben sich aus einem gesteigerten Gesundheitsbewußtsein besondere Anforderungen an reduzierte Nährwertgehalte der Nahrungsmittel, wobei sich für die Arbeit der Verdauungsorgane eine Notwendigkeit herausgestellt hat, neben Nährstoffen auch sog. "Ballaststoffe" zu verabreichen.

So hat es bereits Versuche gegeben, ein kohlehydrat- und kalorienfreies Diätmehl für Brot u. dgl. Backwaren für Diabetiker zu schaffen, bei dem aus dem Mehl der Stärkeanteil herausgewaschen und durch ein Pulver aus Stroh oder sonstigen Pflanzenteilen ersetzt wird.

Auf diese Weise mag es gelingen, ein kalorienarmes Brot herzustellen, dessen geschmackliche Abstimmung ggf. weiteren Zutaten zu überlassen sein wird. Die verwendeten Ballaststoffe erscheinen aber, selbst wenn man von der Geschmackswirkung absieht, keineswegs neutral in Bezug auf alle Auswirkungen auf den Verdauungsorganismus und sind in dieser Hinsicht bestenfalls unschädlich. Die gemahlenen Stroh- oder Holzbestandteile sind nämlich weiter zersetzbar und hinsichtlich ihrer Umwandlungsprodukte nicht schlechthin unbeachtlich.

Aufgabe der Erfindung ist es demgegenüber, Teige, Massen bzw. Mischungen für Backwaren mit einem Ballaststoff zu schaffen, der nicht nur unschädlich ist, sondern darüber hinaus günstige ernährungsphysiologische Auswirkungen entfaltet. Aufgabe der Erfindung ist es weiterhin, Torffraktionen und Verfahren zur Herstellung solcher Teige, Massen und Mischungen zu schaffen.

Gemäß der Erfindung wird diese Aufgabe zum einen von einem Backteig, einer Backmasse bzw. Backmischung nach dem Oberbegriff des Anspruchs 1 ausgehend mit den kennzeichnenden Merkmalen des Anspruchs 1, zum anderen von einer Torffraktion nach dem Oberbegriff 'des Anspruchs 7 ausgehend mit den kennzeichnenden Merkmalen des Anspruchs 7 und schließlich von einem Verfahren nach dem Oberbegriff des Anspruchs 10 ausgehend mit den kennzeichnenden Merkmalen des Anspruchs 10 gelöst. In die Backmischungen sind dabei auch Fertigmehle und Konzentrate einzubeziehen.

Der Einsatz einer Torffraktion als Ballststoff in Backwaren stößt zwar allgemein spontan auf anfängliche Bedenken insoweit, als es sich um ein dem Boden entnommenes und durch organische Umsetzungen gebildetes organisches Produkt handelt, erweist sich aber bei genauerer Untersuchung als überaus vorteilhaft.

Der Torf stellt nämlich das Ergebnis der letzten Umwandlungsphase der organischen Pflanzensubstanz im Boden dar, der nur noch die Mineralisierung zur Kohle folgt. Daraus ergibt sich aber auch, daß die hauptsächlich, nämlich mit einem bis über 50 % hinausgehenden Anteil in der Trockenmasse des Torfs enthaltene Huminsäure insoweit tatsächlich die gewünschte Funktion eines Ballaststoffes übernehmen kann, der dann im Magen- und Darmtrakt des Menschen nicht weiter in erheblichem Maße aufgeschlossen und umgesetzt wird. In dieser Hinsicht ist die Torffraktion sehr viel besser brauchbar als andere, früher versuchsweise eingesetzte Ballaststoffe, welche im Darm noch zersetzbar waren.

Der als Ballaststoff aufgenommene Torf hat aber auch durchaus vorteilhafte Nebenwirkungen. Die Trockenmasse Torf kann aufgrund ihres mikrokapillaren Aufbaus schwammartig eine derart hohe Menge an Wasser aufnehmen, da ein stichfrischer Weißtorf 90 bis 95 Gewichtsprozente Wasser und nur 5 bis 10 % Trockenmasse enthält. Diese starke hygroskopische Wirkung schafft eine gesundheitlich durchaus erwünschte Flüssigkeitsabfuhr mit einem entsprechenden Brot. Die weitestgehend unlösliche Torffraktion besitzt damit eine höhere Wasserbindung als andere bisher bekannte Ballaststoffe.

An organischen Wirkstoffen findet sich im Torf unter anderem Huminsäure. Bekanntermaßen wirkt die Huminsäure entgiftend. Die besondere Befähigung dieser schwachen Säure zu einem Ionenaustausch und zur Anlagerung von metallischen Spurenelementen im Boden ist im Naturhaushalt beachtlich. Diese kann durch die Anbindung solcher Spurenelemente sogar zu Mangelerscheinungen im Boden führen. Als Nahrungsmittelzusatz läßt sich damit eine der Aktivkohle vergleichbare Wirkung erzielen, wobei die Aufnahme von Metallionen auch im Körper im Sinne einer Entgiftung wirkt.

Für diätetische Lebensmittel eröffnet dieses nicht nur Möglichkeiten einer Brennwertverminderung bei Verkürzung der Darm-Transitzeit und Erhöhung des Stuhlgewichts, es ergeben sich auch Vorteile z.B. durch den Abbau von Natrium und anderen Stoffe, wogegen Calcium und Kalium bedarfsweise dem Brot zugesetzt werden können.

Nicht zuletzt zeigt sich, daß mit Zusatz einer Torffraktion lockere, dunkelfarbige und angenehm schmeckende Backwaren zu backen sind. Ein Brot dieser Art spricht schon auf Anhieb mit einem dunklen Schnittbild an. Insbesondere die lockere Struktur des Brotes hebt dieses von sonstigen Präparaten reduzierten Nährgehalts ab, die auf der Basis von Carboxymethylzellulose nach Art von Gelen zum Zusammenklumpen neigen und schon von daher unangenehm zu verspeisen sind.

Sechs Beispiele für die Herstellung eines Brotteigs werden nachfolgend erläutert:

Beispiel 1

Für die Zubereitung eines Brotteigs wird ein Ballaststoff aus einem Hochmoortorf gewonnen, wobei dieser von einer luftgetrockneten Form ausgehend mit Warmluft von 25 % Wassergehalt auf 18% Wassergehalt künstlich heruntergetrocknet wird, um dem natürlichen Wassergehalt des Mehles angeglichen zu sein und eine gut sieb- und mahlfähige Masse zu erhalten. Dieser Torf wird in einer Siebanlage mit einer Maschenweite von 1 mm, wie sie in Mehlfabriken üblich ist, gesiebt, wodurch etwa 30% groberer Torfmasse ausgesiebt werden. Nach dem Sieben wird der Torf gemahlen und erhält eine Körnung von 0 bis 1 mm.

Der so gewonnene Ballaststoff wird mit Mehl gemischt, so daß sich eine Backmischung aus 40 Vol% des Torfprodukts und 60 Vol% des Mehls ergibt. Das Gemisch wird in herkömmlicher Weise mit Wasser so angeteigt, um eine bestmögliche Ergiebigkeit des Teiges zu erzielen. Dieser Brotteig läßt sich in herkömmlicher Weise backen und ergibt ein lockeres, kräftig braun-grau durchgefärbtes Brot angenehmen, leicht säuerlichen Geschmacks.

Beispiel 2

Zur Zubereitung eines Brotteigs wird ein Ballaststoff aus Hochmoortorf, speziell faserfreiem Weißtorf, getrocknet, gesiebt und gemahlen, wie im Beispiel 1 beschrieben. Diese Torffraktion wird zu gleichen Teilen mit Mehl versetzt und mit Wasser zu einem Brotteig angemacht, der sich in herkömmlicher Weise backen läßt. Es entsteht wiederum ein Brot lockerer Konsistenz mit einer dunkleren, torfeigentümlichen Farbe, angenehmen Geschmacks und weicher, lang frischhaltenden Krume.

Es versteht sich, daß in Abwandlung der beiden vorbeschriebenen Ausführungsbeispiele insbesondere zur Geschmacksabwandlung Zusatzbestandteile und Zutaten verschiedenster Art hinzugegeben werden können, wie sie heute ohnehin aufgrund der Angebotsbreite an Brot auf dem Markt zu finden sind. Es versteht sich weiterhin, daß der vorstehend beschriebene Brotteig wie auch das beschriebene Verfahren zu seiner Herstellung auf andere Backwaren, sei es in Form von Brötchen und sei es in Form Feinen Backwaren mit ganz entsprechenden technologisch bedingten Abwandlungen und entsprechenden Vorteilen anwendbar ist und auch für Massen wie Baisermassen angesetzt werden kann.

Eine Backware, die aus einem solchen Brotteig gewonnen ist, gibt aufgrund ihrer lockeren Konsistenz und ihrer flüssigkeitsabsorbierenden Eigenschaften Anlaß zu einem sorgfältigen Kauen, wodurch der für die Ernährung bedenklichen hastigen Eßweise vom Nahrungsmittel her begegnet wird. Auch weiterhin ist die Flüssigkeitsaufnahme günstig und regulierend verwendbar. Es kann aber auch ein Übermaß aufzunehmender Flüssigkeit - ggf. auch Getränkemenge - absorbiert werden. Auffällig ist weiterhin, daß das so gewonnene Brot schnell und anhaltend zu einem Sättigungsgefühl führt und damit Bemühungen um eine maßvolle Ernährung unterstützt. Zu den günstigen ernährungsphysiologischen Reaktionen des Körpers gehört auch die Belebung der Darmtätigkeit, wie sie zwar generell den Ballaststoffen zugeschrieben wird, mit dieser Torffraktion aber in besonderem Maße erzielbar ist. In dieser Hinsicht kann insbesondere darauf verwiesen werden, daß Torf einen reinen Ballaststoffanteil von z.B. 80% haben kann, während etwa Weizenkleie kaum über einen unlöslichen Anteil von 40% an Ballaststoffen hinausgeht.

Beispiel 3

Eine zunächst entsprechend Beispiel 1 und 2 aufbereitete Torffraktion wird - ohne Wasserzugabe - mit Mehl und weiteren Backzutaten versetzt und als trockene Backmischung in Verkehr gebracht.

Beispiel 4

Für die Zubereitung von Backwaren wird Weißtorf getrocknet, gemahlen und auf eine Partikelgröße von bis zu einigen Millimetern gesiebt und als Ballaststoff an lebensmittelherstellende Betriebe geliefert.

Beispiel 5

Ein gemäß Biespiel 4 aus Torf gewonnener trockener Ballaststoff wird im Wasser im Volumenverhältnis von ca 1 : 1 versetzt und in Flüssigkeitsbehältern als fließ- und pumpfähiger Ballaststoff vertrieben, dessen Wasseranteil bei der Herstellung einer Backware entsprechend berücksichtigt wird.

Beispiel 6

Eine Fertigmischung (Fertigmehl) wird zur Herstellung von ballaststoffreichen Backwaren erstellt, die alle notwendigen haltbaren Rohstoffe enthalten, und deren Ballaststoffgehalt vorzugsweise aus einer Torffraktion entsprechend Beispiel 4 besteht.

**Patentansprüche für die Vertragsstaaten: BE, CH, DE, FR, GB, IT, LI, NL, SE**

1. Backteig, -masse bzw. -mischung zur Herstellung von Brot, Teigwaren, Extrudaten, feinen Backwaren und dgl. Backerzeugnissen aus Mehl, Schrot und/oder sonstigen Getreideerzeugnissen und einem physiologisch unbedenklichen Ballaststoff, dadurch gekennzeichnet, daß der Ballaststoff überwiegend aus einer Torffraktion besteht.

2. Backteig nach Anspruch 1, dadurch gekennzeichnet, daß die Torffraktion aus einem Hochmoortorf gewonnen ist.

3. Backteig nach Anspruch 1 oder 2, dadurch gekennzeichnet, daß die Torffraktion aus einem getrockneten, gemahlenen und gesiebten Torf besteht.

4. Backteig nach Anspruch 3, dadurch gekennzeichnet, daß die Torffraktion einen Wasseranteil von weniger als 20% enthält.

5. Backteig nach einem der Ansprüche 1 bis 4, dadurch gekennzeichnet, daß die Torffraktion neben einem Mehlanteil einen Mengenanteil bis zu 100% des Mehls annimmt.

6. Backteig nach Anspruch 5, dadurch gekennzeichnet, daß die Torffraktion einen Mengenanteil von etwa 50% des Mehls aufweist.

7. Torffraktion zur Herstellung von Backteigen, -massen oder -mischungen nach Anspruch 3 oder 4, dadurch gekennzeichnet, daß es getrocknete Feinpartikel eines gemahlenen und auf eine Partikelgröße von weniger als 1 mm gesiebten Torfs enthält.

8. Torffraktion nach Anspruch 7, dadurch gekennzeichnet, daß es mit Wasser zu einer pumpfähigen Flüssigmischung versetzt ist.

9. Fertigmehl zur Herstellung von ballaststofffreichen Backwaren, dadurch gekennzeichnet, daß es einen Ballastoffanteil enthält, welcher aus einer Torffraktion gebildet ist.

10. Verfahren zur Herstellung von Backteigen, -massen bzw. -mischungen nach einem der Ansprüche 1 bis 8, bei dem zumindest ein Getreideerzeugnis und zumindest ein Ballaststoff als Hauptbestandteile vermengt oder vermischt werden, dadurch gekennzeichnet, daß Torf getrocknet, gesiebt, gemahlen und als Ballaststoff zugegeben wird.

11. Verfahren nach Anspruch 10, dadurch gekennzeichnet, daß der Torf vor der Zugabe mittels warmer bzw. trockener Luft auf einen unter 20% liegenden Wassergehalt getrocknet wird.

12. Verfahren nach Anspruch 10 oder 11, dadurch gekennzeichnet, daß der Torf mit einer Maschenweite von etwa 1 mm gesiebt wird.

13. Verfahren nach Anspruch 10 oder 11, dadurch gekennzeichnet, daß der Torf mit einer Maschenweite bis etwa 5 mm gesiebt wird.

## Patentansprüche für den Vertragsstaat: AT

1. Torffraktion zur Herstellung von Backteigen, -massen oder -mischungen zur Herstellung von Brot, Teigwaren, Extrudaten, feinen Backwaren und dergleichen Backerzeugnissen aus Mehl, Schrot und/oder sonstigen Getreideerzeugnissen und einem physiologisch unbedenklichen Ballaststoff, der überwiegend aus einer Torffraktion besteht, dadurch gekennzeichnet, daß sie getrocknete Feinpartikel eines gemahlenen und auf eine Partikelgröße von weniger als 1 mm gesiebten Torfs enthält.

2. Torffraktion nach Anspruch 1, dadurch gekennzeichnet, daß es mit Wasser zu einer pumpfähigen Flüssigmischung versetzt ist.

3. Verfahren zur Herstellung von Backteigen, -massen bzw. -mischungen, bei dem zumindest ein Getreideerzeugnis und zumindest ein Ballaststoff als Hauptbestandteile vermengt oder vermischt werden, dadurch gekennzeichnet, daß ein Ballaststoff verwendet wird, der überwiegend aus einer Torffraktion besteht.

4. Verfahren nach Anspruch 3, dadurch gekennzeichnet, daß Torf getrocknet, gesiebt, gemahlen und als Ballaststoff zugegeben wird.

5. Verfahren nach Anspruch 4, dadurch gekennzeichnet, daß der Torf vor der Zugabe mittels warmer bzw. trockener Luft auf einen unter 20% liegenden Wassergehalt getrocknet wird.

6. Verfahren nach Anspruch 4 oder 5, dadurch gekennzeichnet, daß der Torf mit einer Maschenweite von etwa 1 mm gesiebt wird.

7. Verfahren nach Anspruch 4 oder 5, dadurch gekennzeichnet, daß der Torf mit einer Maschenweite bis etwa 5 mm gesiebt wird.

## Claims for the Contracting States: BE, CH, DE, FR, GB, IT, LI, NL, SE

1. A baking dough, paste or mixture for the production of bread, pasta, extruded goods, fancy cakes and the like baked products from fluor, course meal and/or other grain products and a physiologically harmless bulkage, characterised in that the bulkage consists predominantly of a peat fraction.

2. A baking dough according to claim 1, characterised in that the peat fraction is obtained from an upland moor peat.

3. A baking dough according to claim 1 or 2, characterised in that the peat fraction consists of a dried, ground and sifted peat.

4. A baking dough according to claim 3, characterised in that the peat fraction contains a proportion of water of less than 20%.

5. A baking dough according to any one of the claims 1 to 4, characterised in that the peat fraction besides its flour proportion accepts a proportionate amount of up to 100% of the flour.

6. A baking dough according to claim 5, characterised in that the peat fraction constitutes a proportionate amount of about 50% of the flour.

7. A peat fraction for the production of baking doughs, pastes or mixtures according to claim 3 or 4, characterised in that it contains dried fine particles of a ground peat sifted to a particle size of less than 1 mm.

8. A peat fraction according to claim 7, characterised in that it is mixed with water to form a pumpable liquid mixture.

9. A ready-made flour for the production of baker's goods rich in bulkage, characterised in that it contains a proportion of bulkage, which is formed from a peat fraction.

10. A method of producing baking doughs, pastes or mixtures according to any one of the claims 1 to 8, wherein at least one grain product and at least one bulkage are blended or mixed as main ingredients, characterised in that peat is dried, sifted, ground and added as bulkage.

11. A method according to claim 10, characterised in that, before being added the peat is dried by means of a hot or dry air, respectively, to a water content below 20%.

12. A method according to claim 10 or 11, characterised in that the peat is sifted with a mesh size of about 1 mm.

13. A method according to claim 10 or 11, characterised in that the peat is sifted with a mesh size of about 5 mm.

## Claims for the Contracting State: AT

1. A peat fraction for the production of baking doughs, pastes or mixtures for the production of bread, pasta, extruded goods, fancy cakes and the like baked products from flour, course meal and/or other grain products and a physiologically harmless bulkage consisting predominantly of a peat fraction characterised in that it contains dried fine particles of a ground peat sifted to a particle size of less than 1 mm.

2. A peat fraction according to claim 1, characterised in that it is mixed with water to form a pumpable liquid mixture.

3. A method of producing baking doughs, pastes or mixtures wherein at least one grain product and at least one bulkage are blended or mixed as main ingredients, characterised in that a bulkage is used, which consists predominantly of a peat fraction.

4. A method according to claim 3, characterised in that peat is dried, sifted, ground and added as bulkage.

5. A method according to claim 4, characterised in that, before being added the peat is dried by means of a hot or dry air, respectively, to a water content below 20%.

6. A method according to claim 4 or 5, characterised in that the peat is sifted with a mesh size of about 1 mm.

7. A method according to claim 4 or 5, characterised in that the peat is sifted with a mesh size of about 5 mm.

**Revendications pour les Etats contractants: BE, CH, DE, FR, GB, IT, LI, NL, SE**

1. Pâte, masse ou mélange de boulangerie pour la préparation du pain, de pâtes alimentaires, de produits extrudés, de produits de pâtisserie et de produits de boulangerie analogues à base de farine, de gruau et/ou d'autres produits céréaliers et de fibres alimentaires physiologiquement inoffensives, caractérisée en ce que les fibres alimentaires consistent principalement en un fraction de tourbe.

2. Pâte de boulangerie suivant la revendication 1, caractérisée en ce que la fraction de tourbe est isolée d'une tourbe montagne.

3. Pâte de boulangerie suivant la revendication 1 ou 2, caractérisée en ce que la fraction de tourbe consiste en une tourbe séchée, moulue et tamisée.

4. Pâte de boulangerie suivant la revendication 3, caractérisée en ce que la fraction de tourbe a une teneur en eau de moins de 20%.

5. Pâte de boulangerie suivant l'une quelconque des revendications 1 à 4, caractérisée en ce que la fraction de tourbe prend en plus d'une proportion de la farine, une proportion quantitative jusqu'au 100% de la farine.

6. Pâte de boulangerie suivant la revendication 5, caractérisée en ce que la fraction de tourbe constitue une proportion quantitative d'environ 50% de la farine.

7. Fraction de tourbe pour la préparation de pâtes, masses ou mélanges de boulangerie suivant la revendication 3 ou 4, caractérisée en ce qu'elle contient de fines particules séchées d'une tourbe moulue et tamisée jusqu'à une granulométrie de moins de 1 mm.

8. Fraction de tourbe suivant la revendication 7, caractérisée en ce qu'elle est additionnée d'eau en un mélange liquide propre à être pompé.

9. Farine prête à l'usage pour la préparation de produits de boulangerie riches en fibres alimentaires, caractérisée en ce qu'elle contient une proportion de fibres alimentaires constituée par une fraction de tourbe.

10. Procédé de préparation de pâtes, masses ou mélanges de boulangerie suivant l'une quelconque des revendications 1 à 8, suivant lequel au moins un produits céréalier et au moins un type de fibres alimentaires sont mélangés ou incorporés comme constituants principaux, caractérisée en ce que de la tourbe est séchée, tamisée et moulue et ajoutée comme fibres alimentaires.

11. Procédé suivant la revendication 10, caractérisée en ce qu'avant l'addition, la tourbe est séchée au moyen d'air chaud ou sec jusqu'à une teneur en eau inférieure à 20%.

12. Procédé suivant la revendication 10 ou 11, caractérisée en ce que la tourbe est tamisée avec une largeur des mailles d'environ 1 mm.

13. Procédé suivant la revendication 10 ou 11, caractérisée en ce que la tourbe est tamisée avec une largeur des mailles s'élevant jusqu'à environ 5 mm.

**Revendications pour l'Etat contractant: AT**

1. Fraction de tourbe pour la préparation de pâtes, masses ou mélanges de boulangerie pour la préparation du pain, de pâtes alimentaires, de produits extrudés, de produits de pâtisserie et de produits de boulangerie analogues à base de farine, de gruau et/ou d'autres produits céréaliers et de fibres alimentaires physiologiquement inoffensives, consistant principalement en une fraction de tourbe, caractérisée en ce qu'elle contient de fines particules séchées d'une tourbe moulue et tamisée jusqu'à une granulométrie de moins de 1 mm.

2. Fraction de tourbe suivant la revendication 1, caractérisée en ce qu'elle est additionnée d'eau en un mélange liquide propre à être pompé.

3. Procédé de préparation de pâtes, masses ou mélanges de boulangerie suivant lequel au moins un produits céréalier et au moins un type de fibres alimentaires sont mélangés ou incorporés comme constituants principaux, caractérisé en ce que des fibres alimentaires sont employées constituées principalement en un fraction de tourbe.

4. Procédé suivant la revendication 3, caractérisé en ce que de la tourbe est séchée, tamisée et moulue et ajoutée comme fibres alimentaires.

5. Procédé suivant la revendication 4, caractérisé en ce qu'avant l'addition, la tourbe est séchée au moyen d'air chaud ou sec jusqu'à une teneur en eau inférieure à 20%.

6. Procédé suivant la revendication 4 ou 5, caractérisé en ce que la tourbe est tamisée avec une largeur des mailles d'environ 1 mm.

7. Procédé suivant la revendication 4 ou 5, caractérisé en ce que la tourbe est tamisée avec une largeur des mailles s'élevant jusqu'à environ 5 mm.